# EUROPEAN PATENT APPLICATION

(11) **EP 4 656 621 A1**
(43) Date of publication of application: **03.12.2025**
(21) Application number: 25179711.4
(22) Date of filing: 29.05.2025
(51) Int. Cl.: C04B 41/00, C04B 41/52, C04B 41/89, F01D 5/28, C04B 111/28, C04B 111/00

(54) **DAMAGE RESISTANT CERAMIC MATRIX COMPOSITES**

(30) Priority: 30.05.2024 US 202418678769
(71) Applicant: RTX Corporation, Farmington, CT 06032 (US)
(72) Inventor: COLBY, Mary, West Hartford, 06117 (US); HOLOWCZAK, John H., South Windsor, 06074 (US)
(74) Representative: Dehns

(57) **Abstract**

A method for improving the foreign object damage tolerance of a ceramic matrix composite (CMC) structures by applying an environmental barrier coating (EBC) (20) containing an intumescent material to the surface of the ceramic matrix composite (10). The EBC coated ceramic matrix composite (10) is heated to intumescent material expansion temperature of, for example, between about 600 to 1000 °C to expand the intumescent material. The intumescent loaded EBC layer (20) may be applied to a CMC (10) that does or does not contain intumescent material.

## Description

### FIELD OF THE INVENTION

The present disclosure relates to methods for producing environmental barrier coatings (EBC's) for protection of ceramic matrix composites ("CMCs"), with improved adherence and foreign object damage (FOD) characteristics. CMCs are advantageous in many applications, including but not limited to applications within gas turbine engines.

### BACKGROUND OF THE INVENTION

In comparison to monolithic ceramics, CMCs offer improved foreign object damage (FOD) tolerance. However, such tolerance can be still below levels seen in superalloys. This hampers use of CMC materials, especially in rotating components such as turbine blades.

Additionally, CMC components can be provided with coatings to provide protection to the underlying CMC against harsh environmental conditions, such as exposure to corrosive high temperature water vapor, or excessive temperatures. These protective coatings are known as environmental barrier coatings (EBCs). Such coatings are also susceptible to FOD and thus desirably exhibit FOD resistance.

To enhance FOD resistance, it is advantageous for CMC coatings such as EBCs to exhibit good adhesion to the underlying CMC substrate. However, mismatches in physical properties, such as thermal expansion and elastic modulus, between the CMC substrate and coating(s) can lead to stress formation and adhesion problems as a result thereof. For example, many EBCs that provide good environmental resistance are higher in thermal expansion than the matrix/fiber composite the CMC, yet lower in elastic modulus. These mismatches result in tension in the coating when the components are cooled below EBC deposition temperature. This tensile stress can lead to coating cracking and/or spallation.

The adherence of EBCs to CMCs has been shown to be enhanced by grading properties such as modulus and thermal expansion within the coating. However, there still exists a need to improve the adherence between CMCs and their coatings such as by providing further techniques for grading the physical properties of the coatings.

### SUMMARY OF THE INVENTION

The present disclosure is directed, in a first aspect, to a method for improving foreign object damage tolerance by:
applying an environmental barrier coating (EBC) containing intumescent material(s) to a CMC substrate, and
heating the EBC coated CMC substrate to expand the intumescent material(s).

In yet another aspect, the present disclosure is directed to a ceramic matrix composite containing:
a CMC substrate comprising a plurality of fiber tows, each containing a plurality of fibers/filaments, and a ceramic matrix, and
an environmental barrier coating (EBC) on the CMC substrate wherein the EBC coating contains expanded intumescent material.

In yet another aspect, which the Applicant expressly reserves the right to claim independently, the present disclosure is directed to a ceramic matrix composite containing:
a plurality of fiber tows, each containing a plurality of filaments, in an outer layer of the ceramic matrix composite;
expanded intumescent material located in voids between at least a portion of the plurality of fiber tows of the outer layer, or between individual filaments of fiber tow(s) in the outer layer; a matrix surrounding the fiber tows; and
an environmental barrier coating on the outer layer of the ceramic matrix composite wherein the environmental barrier coating contains expanded intumescent material.

In further examples of the present disclosure, including further examples of the above, the intumescent materials can be selected from ceramic yielding minerals, intumescent mineral particles, intumescent polymers, and combinations thereof.

In further examples of the present disclosure, including further examples of the above, the intumescent materials can be selected from alkali aluminosilicates, vermiculite, mica, perlite, expanded graphite, montmorillonite, polymers, and combinations thereof.

In further examples of the present disclosure, including further examples of the above, the intumescent material can be selected from particles of vermiculite, sol-gel vermiculite, low iron vermiculite (< 5,000 ppm iron), substantially iron free (< 100 ppm iron) vermiculite, mica, perlite, expanded graphite, montmorillonite, and combinations thereof.

In further examples of the present disclosure, including further examples of the above, the intumescent materials can be selected from polymeric intumescents.

In further examples of the present disclosure, including further examples of the above, the polymeric intumescents can be selected from polypropylene, polyamide, thermoplastic polyurethane, and combinations thereof.

In further examples of the present disclosure, including further examples of the above, the fiber/filaments of the fiber tows of the CMC can contain silicon carbide (SiC), carbon, mullite Al₂O₃·2SiO, mullite Al₂O₃·SiO₂, silicon nitride, aluminum oxide, or a combination thereof.

In further examples of the present disclosure, including further examples of the above, the EBC can contain between about 2 to 40 vol.% intumescent particulate load, for example, about 5 to 20 vol.% intumescent particulate load.

In further examples of the present disclosure, including further examples of the above, the intumescent particles can have a size between about 0.5 to 110 microns, for example, 0.5 to 100 microns, 60 to 110 microns, or 1 to 10 microns.

In further examples of the present disclosure, including further examples of the above, prior to application of EBC coating, a CMC preform is densified via chemical vapor infiltration, polymer infiltration and pyrolysis (PIP), or infiltration of silicon or silicon alloys to form the CMC substrate.

In further examples of the present disclosure, including further examples of the above, the intumescent material can be heated to a transformation temperature of between about 600 to 1000 °C to form the expanded intumescent material.

In further examples of the present disclosure, including further examples of the above, the EBC is a multi-layer EBC and includes a bond coat and a top coat. The bond coat is deposited on the densified CMC and can comprise, for example, a metalloid such as silicon, or a glass-ceramic containing particles whose purpose is to getter oxygen diffusing through the EBC.

In further examples of the present disclosure, including further examples of the above, the bond coat can further include intumescent material such as vermiculite or perlite.

In further examples of the present disclosure, including further examples of the above, the top coat of the EBC may contain hafnium silicates, zirconium silicates, rare earth monosilicates (RE₂SiO₅) rare earth disilicates (RE₂Si₂O₇), rare earth phosphates, aluminosilicates, or HfO₂-SiO₂-rare earth oxide, and combinations thereof, wherein RE is Sc, Y, La, Ce, Pr, Nd, Pm, Sm, Eu, Gd, Tb, Dy, Ho, Er, Tm, Yb, or Lu.

In further examples of the present disclosure, including further examples of the above, in the top coat of the EBC contains yttria-stabilized zirconia (YSZ), a rare earth silicate, a lanthanum silicate (La₂SiO₅), a ytterbium silicate (Yb₂SiO₃), mullite (3Al₂O₃·2SiO or 2Al₂O₃·SiO₂), hafnium oxide (HfO₂), hafnium silicate or a combination thereof.

In further examples of the present disclosure, including further examples of the above, the top coat of the EBC layer contains mullite 3Al₂O₃·2SiO, mullite 2Al₂O₃·SiO₂, or a combination thereof.

### BRIEF DESCRIPTION OF FIGURES

The features of the disclosure believed to be novel and the elements characteristic of the invention are set forth with particularity in the appended claims. The figures are for illustration purposes only and are not drawn to scale. The disclosure itself, however, both as to organization and method of operation, can best be understood by reference to the description of the preferred embodiment(s) which follows, taken in conjunction with the accompanying drawings in which:
FIGs. 1A-1C schematically illustrate the effect of an FOD impacted by a foreign object on an EBC.
FIG. 2 is a simplified schematic drawing of a cross-sectional view through a fiber bundle with intumescent particles located in the fiber voids of the outer portions of the fiber bundle of the CMC. FIG. 2A shows the intumescent particles within the fiber tow voids before expansion and FIG. 2B shows the intumescent particles within the fiber tow voids after expansion.

### DETAILED DESCRIPTION OF THE INVENTION

The embodiments of the present disclosure can comprise, consist of, and consist essentially of the features and/or steps described herein, as well as any of the additional or optional ingredients, components, steps, or limitations described herein or would otherwise be appreciated by one of skill in the art. It is to be understood that all concentrations disclosed herein are by weight percent (wt. %.) based on a total weight of the composition unless otherwise indicated.

Generally, the disclosure relates to CMC articles such as those used in gas turbine engines. In particular, the disclosure relates to incorporating intumescent particles into an EBC coating system on a CMC substrate to affect the physical properties of the EBC at the interface of the EBC with the CMC substrate. The intumescent material expands when heated to intumescent particle transformation temperatures, reducing the elastic modulus of the EBC at the interface with the CMC substrate thereby reducing the difference in elastic modulus between the CMC substrate and the EBC and, as a result, improving FOD resistance.

CMCs are made from ceramic preforms that are shaped structures made from ceramic fibers or fiber tows. These preforms serve as the initial framework for creating CMCs. Preforms can be in the form of sheets, blankets, or intricate 3D shapes. They determine the final architecture and geometry of the composite. Within a CMC preform, the fibers (or filaments) or fiber tow bundles may be twisted or untwisted, and may be arranged in woven, non-woven, braided, knitted or other known fiber architectures.

The fibers/filaments used in the CMC preforms may be, for example, silicon carbide (SiC), carbon, mullite (3Al₂O₃·2SiO or 2Al₂O₃SiO₂ or combinations thereof), silicon nitride or aluminum oxide. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In one particular example, the fibers are silicon carbide fibers.

After the CMC preform is formed, the preform may be subjected to densification to fill the remaining void space and form the CMC. Densification involves reducing the porosity within the composite material, making it more solid and robust, by filing the remaining pores with a matrix material. The goal is to achieve a high relative density, ensuring that the final CMC structure is compact and free of large voids.

Following densification, the resultant CMC substrate can be provided with protective coatings, such as environmental barrier coatings (EBCs), to provide protection to the underlying CMC substrate against harsh environmental conditions (e.g., corrosive high temperature water vapor, or excessive temperatures). To provide FOD resistance, such coatings preferably exhibit strong adhesion to the underlying CMC.

However, mismatches in physical properties, such as thermal expansion and elastic modulus, between the CMC and coating(s) can lead to stress formation and adhesion problems as a result thereof. For example, large differences in the thermal expansion coefficient of the CMC substrate and an EBC can result in spalling and reduced FOD resistance.

In accordance with the present disclosure, the impact of differences in the elastic modulus between the coating and the CMC can be graded to thereby reduce the effect of thermal expansion mismatch stresses. In particular, by inclusion of intumescent materials into the coating (e.g., EBC) at the interface between the coating and the CMC can reduce the elastic modulus of the coating thereby reducing the elastic modulus differential at the interface, i.e., reducing the property mismatch. This in turn reduces the level of residual stress built up in the coating. By reducing the elastic modulus differential and residual stresses in the EBC at or near the CMC interface, FOD resistance is improved.

As used herein, FOD in composite materials refers to any damage caused by the intrusion of foreign objects into the composite structure. These foreign objects could be particles, debris, or other materials that are not part of the original composite structure.

FOD can occur during use, as well as during manufacturing, transportation, assembly, or service of composite components. It can manifest in various forms, such as scratches, dents, punctures, or delaminations. In composite materials, FOD can be particularly concerning because such damage can compromise the structural integrity and thus the performance of the CMC component. Even small defects or damage can lead to stress concentrations, which may propagate over time, resulting in structural failure.

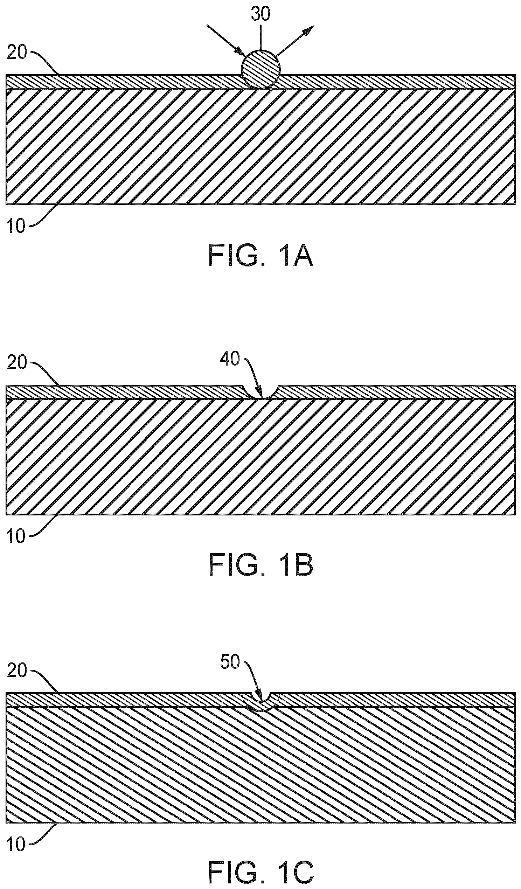

FIGS. 1A-1C schematically illustrate the protective effect that embedded intumescent material can have on an EBC coated CMC component. FIG. 1A shows a CMC composite 10 coated with an EBC coating system 20. The EBC 20 is shown being impacted by a foreign object 30. As can be seen in FIG. 1B, the impact of foreign object 30 can result in damage 40 to the EBC 20. Such damage exposes the interior of the CMC (i.e., the region below EBC 20) thereby facilitating penetration of, for example, high temperature water vapor which can deteriorate the CMC. However, as shown in FIG. 1C, when intumescent materials are embedded into the EBC 20, foreign object damage 50 is minimized due to the expanded intumescent material which significantly reduces local elastic modulus of the EBC 20, and which in turn reduces the stress response to an FOD impact.

EBCs can be formed as a multilayered coating system having, for example, a bond coat layer for enhancing adhesion to the CMC substrate, and a top coat layer exhibiting desired environmental protection characteristics. If a bond coat layer is present, it is desirable to include the intumescent materials into the bond coat as this will be the layer in contact with the CMC substrate.

EBC layers can be made from a variety of materials such as hafnium silicates, zirconium silicates, rare earth monosilicates (RE₂SiO₅) (e.g., yttrium silicate), rare earth disilicates (RE₂Si₂O₇), rare earth phosphates, aluminosilicates, or HfO₂-SiO₂-rare earth oxide, and combinations thereof, wherein RE is Sc, Y, La, Ce, Pr, Nd, Pm, Sm, Eu, Gd, Tb, Dy, Ho, Er, Tm, Yb, or Lu), for example, yttria-stabilized zirconia (YSZ), a rare earth silicate, a lanthanum silicate (La₂SiO₅), a ytterbium silicate (Yb₂SiO₃), mullite (3Al₂O₃·2SiO or 2Al₂O₃SiO₂), hafnium oxide (HfO₂) or hafnium silicate. EBC layers can also be made from mixtures of materials such as a mixture of hafnon (HfSiO₄) and zircon (ZrSiO₄), or a mixture of rare earth monosilicate and rare earth disilicate.

The coating or the initial layer (e.g., a bond coat layer) of an EBC coating system (can be applied in the form of an aqueous slurry or other fluid slurry (e.g., mixture of coating material, solvent, optional intumescent particles, and optional sintering aids), which is prepared and deposited onto the CMC substrate. In accordance with the present disclosure, this slurry can further contain the intumescent materials. Application of material as a slurry allows relatively simple and uniform application of the EBC as desired. The bond coat can be formed from various materials, such as for example incorporating gettering particles into a glass-ceramic material layer.

EBCs can also be applied to CMC substrates using techniques such as chemical vapor deposition (CVD) or plasma spraying (e.g., atmospheric plasma spraying (APS), vacuum plasma spraying (VPS), low pressure plasma spraying (LPPS), shrouded plasma spraying, and suspension plasma spraying (SPS)). In plasma spraying, powdered EBC materials are heated and accelerated by a plasma jet, which then deposits them onto the CMC substrate. In CVD, a gas-phase reactant decomposes on the heated substrate surface, forming a solid coating. In certain embodiments the intumescent material(s) may also be applied to the CMC surface prior to CVD or plasma spraying. Thus, the intumescent particles are incorporated into the EBC coating during the CVD or plasma spraying application process.

After the CMC is coated with the EBC coating, the EBC coated ceramic matrix composite can be heated to an intumescent particle expansion temperature of, for example, between about 600 to 1000 °C.

The intumescent particles can be, for example, ceramic yielding minerals, intumescent mineral particles, intumescent polymers, and combinations thereof. For example, the intumescent materials can be selected from alkali aluminosilicates, vermiculite, mica, perlite, expanded graphite, montmorillonite, polymers, and combinations thereof. Also, the intumescent material can be selected from particles of vermiculite, sol-gel vermiculite, low iron vermiculite (< 5,000 ppm iron), substantially iron free (< 100 ppm iron) vermiculite, mica, perlite, expanded graphite, montmorillonite, and combinations thereof.

Additionally, the intumescent material can be selected from polymeric intumescent materials. The polymeric intumescent materials can be selected from polypropylenes, polyamides, thermoplastic polyurethanes, and combinations thereof.

The intumescent material can be incorporated into the EBC (e.g., in a slurry used to form the EBC, including in a suspension (slurry) used to form the bond coat of the EBC) in the form of particles having a particle size between about 0.5 to 110 microns, such as 0.5 to 10 microns. In further examples, the average intumescent particle size can be between about 1 to 100 microns (e.g., 1 to 10 microns, 1-3 microns, 4-7 microns, or 8 to 10 microns). The EBC coating may contain 2 to 40 vol.% intumescent particulate load, for example, about 5 to 40 vol.% intumescent particulate load (e.g., 6 to 10 vol.%, 11 to 15 vol.%, 16-20 vol.%, 2-10 vol.%, 10-30 vol.%, 30 to 40% vol).

The intumescent material can also be incorporated into the EBC top coat, for example, in an amount of 2 to 5 vol.%.

As noted above, the intumescent material(s) may also be applied to the CMC surface prior to CVD or plasma spraying. Deposition of the intumescent material can be carried out in various ways. A coating medium containing the intumescent material (e.g. an intumescent particle slurry) can be deposited on the CMC surface by, for example, spraying, printing, or painting.

Intumescent materials resist combustion and expand when subjected to high temperatures. The intumescent materials can be, for example, ceramic yielding minerals or intumescent mineral particles such as particles of alkali aluminosilicates, vermiculite, mica, perlite, expanded graphite, montmorillonite, or combinations thereof. In some particular examples, the intumescent particles can be synthetic vermiculite or sol-gel vermiculite. In other particular examples, a low iron (< 5000 ppm) vermiculite or substantially iron free (< 100 ppm) form of vermiculite can be used.

Synthetic forms of vermiculite prepared from a sol gel process and low sodium (< 5000 ppm) or sodium free (< 100 ppm) form of perlite may also be used. Other suitable intumescent particles include other aluminosilicates, and foam glass.

Intumescent particles expand significantly when heated, transforming from a compact state to a voluminous particle. In general, mineral based intumescent particle transformation temperatures are between about 600 to 1000 °C. The exact percentage of expansion varies based on the type of particle, specific conditions, and temperature ranges. Graphite, for example, can have a 10-fold increase in surface area.

For example, montmorillonite is a type of clay mineral belonging to the smectite group, which is a subclass of phyllosilicates. Above 400°C, the thermal expansion of montmorillonite becomes particularly significant. The interlayer structure of montmorillonite collapses at temperatures ranging from 500°C to 700°C and particles exhibit inhomogeneous thermal expansion. Thus, in embodiments in which the intumescent particles are montmorillonite, the expansion temperature range is between about 500°C to 700°C.

The thermal expansion of perlite begins when it reaches temperatures of approximately 850-900°C. During this process, the water trapped within the perlite structure vaporizes and escapes, leading to the expansion of the material. The resulting expanded perlite can increase its volume by 7-16 times compared to its original state.

On the other hand, the thermal expansion of vermiculite begins when it reaches temperatures of approximately 900°C. At such temperatures, vermiculite can expand up to 10 times or more compared to its original volume.

As noted above, various forms of vermiculite can be used as the intumescent material. Sol-gel vermiculite is prepared through a process that combines sol-gel chemistry with the unique properties of vermiculite. The sol gel process begins with raw vermiculite, which is a hydrous phyllosilicate mineral typically mined from natural deposits and consists of thin, flat flakes containing microscopic layers of water. The sol-gel method involves creating a sol, which is a colloidal suspension of solid particles in a liquid (usually water or alcohol). In the case of vermiculite, the sol-gel process aims to modify its structure and properties by introducing additional components. Briefly, the raw vermiculite is hydrated to ensure it contains the necessary water molecules within its structure. A precursor solution (the sol) is prepared by mixing the hydrated vermiculite with a suitable solvent. This solvent can be water or an organic liquid. The sol undergoes a gelation process, where the particles start to aggregate and form a three-dimensional network. The gel is carefully dried to remove the solvent. Upon heat treatment to a specific temperature, the trapped water molecules in the vermiculite structure evaporate. The vermiculite particles expand due to the rapid vaporization of water.

In some embodiments of the present invention the intumescent material is a synthetic vermiculate. Synthetic vermiculite can be prepared by such processes as wet and dry grinding of raw vermiculite to create submicron-sized particles. Mechanical shearing force can also be used to delaminate vermiculite layers, resulting in finer particles. Synthetic vermiculite can be prepared by subjecting raw materials to hydrothermal conditions (high temperature and pressure) in the presence of water. This process can lead to the formation of vermiculite-like structures with modified properties. Chemical treatments can alter the structure and properties of vermiculite. For example, ionic metal exchange or treatment with hydrogen peroxide can modify the interlayer spacing and enhance specific characteristics.

In some embodiments, expanded graphite can be used as the intumescent material. Expanded graphite, also known as graphite foam or expanded graphite intercalation compound, is derived from natural graphite flakes. The material is produced by intercalating (inserting) various chemicals (such as sulfuric acid, nitric acid, or potassium permanganate) between the layers of graphite. The intercalation process creates a sandwich-like structure where the layers of graphite are separated by the intercalating agent. When heated, the intercalating agent vaporizes, causing the graphite layers to expand. The resulting expanded graphite has a foamy, porous structure with excellent thermal and electrical conductivity. The exact expansion temperature for expanded graphite depends on the specific intercalating agent used and the processing conditions. Generally, expanded graphite undergoes significant expansion when heated to temperatures above 600°C. At these elevated temperatures, the intercalating agent decomposes, releasing gases and causing the graphite layers to separate and the material to further expand.

In other embodiments, the intumescent materials can be polymeric intumescent materials. For example, polymeric intumescent materials can be selected from polypropylenes, polyamides, thermoplastic polyurethanes, and combinations thereof. Polymeric intumescent materials can be incorporated into a slurry use to for the EBC or can be coated onto the CMC as a solution of dissolved polymer, a suspension of solid polymer particles, or as a liquid polymer. For polymers, the transformation temperature is, for example, between about 200 to 600 °C

In addition to intumescent material being incorporated into the EBC, intumescent material can also be incorporated into an outer layer(s) of the CMC to affect modification of the elastic modulus at the EBC/CMC interface. The intumescent materials can be selected from the same materials mentioned above for use in the EBC and expanded in the same manner as described above.

Thus, in certain embodiments of the present disclosure, the EBC contains intumescent material and coats a CMC that does not contain intumescent material. In certain embodiments, the EBC contains intumescent material and coats a CMC that also contains intumescent material.

CMCs are made from ceramic preforms that are shaped structures made from ceramic fibers or fiber tows. These preforms serve as the initial framework for creating CMCs. Preforms can be in the form of sheets, blankets, or intricate 3D shapes. They determine the final architecture and geometry of the composite. Within a CMC preform, the fibers or fiber tow bundles may be twisted or untwisted, and may be arranged in woven, non-woven, braided, knitted or other known fiber architectures. The CMC preform may further include a matrix precursor within which the fibers reside.

The fiber tows may be woven into plies, and a collection of the plies may then be shaped into a preform of the CMC component. Within the preform, voids will exist between the fibers/filaments of individual tows (intra-tow voids or inter-filament voids) as well voids between individual tows in the CMC preform (inter-tow voids). For example, the tows (e.g., SiC fiber tows) may only fill a portion of the preform (e.g., about 30-60 % of the preform volume), thereby leaving a remainder of the preform (e.g., about 40-70 %) as void space within the perimeter of the preform.

The voids between the fibers in a tow bundle will vary depending on the fiber diameter and how the fibers are arranged. The typical diameter of each individual filament in a fiber tow ranges from 10 to 15 micrometers (µm), which is equivalent to approximately 0.40 to 0.59 mils. The voids within a fiber tow are often small due to the fine diameter of the individual filaments.

As the fibers of the tows used in CMCs (e.g., silicon carbide, silicon nitride, and carbon fibers or filaments) have higher elastic modulus than most ceramic matrices, the spreading of the fibers within the tows serves to reduce the local fiber volume fraction, and thence the elastic modulus of fabric layers formed from such tows. Those skilled in the art will recognize that lowering elastic modulus can serve to reduce the materials stress response to impact, or serve to provide a graded modulus to CMC.

Spreading of the fibers within the tows can be achieved by applying a coating medium containing intumescent medium onto and into the outer layer(s) of a CMC preform to form an intumescent coated/infiltrated CMC preform. The intumescent material can then be expanded by heating the coated CMC preform to intumescent transformation temperatures, whereby the intumescent material expands pushing apart individual fibers/filaments within a tow and pushing apart adjacent tows. The inter-filament voids and/or inter-tow voids are thus filled with lower density materials with decreased elastic modulus. The expansion of the intumescent material reduces the local volume fraction of fibers and in turn improves impact resistance by decreasing the local elastic modulus of the layer(s) and enhancing the independent action of individual filaments (shown to increase both strength and work of fracture). This expansion reduces the elastic modulus of the outer layers, which can improve FOD resistance.

In general, ceramic fibers used in CMCs are thin, elongated strands made from materials like, for example, silicon carbide (SiC), alumina (Al₂O₃), carbon, mullite (3Al₂O₃·2SiO or 2Al₂O₃SiO₂), silicon nitride, or other ceramics. The ceramic fibers may also be oxycarbide-, oxynitride-, carbonitride-, silicate-, boride-, phosphide-, or oxide-based fibers. In still further examples, the fibers are fully crystalline, partially crystalline, or predominantly amorphous or glassy. In some particular examples, the fibers are silicon carbide fibers. These are just a few examples of fibers used in ceramic matrix composites. Each type of fiber can offer unique properties and advantages, allowing for tailored performance in various high-performance applications. The choice of fiber type depends on the specific requirements of the application, including temperature range, mechanical loads, and environmental conditions.

These fibers are typically continuous and have high-temperature stability, excellent mechanical properties, and resistance to chemical corrosion. Fiber tows refer to bundles of these fibers (or filaments), arranged, for example, in parallel. Tows serve as the fundamental building blocks for creating CMCs. The fiber tow may include discontinuous fibers, continuous fibers, or some combination thereof. Each fiber tow may comprise a substantial number of fibers/filaments. The specific number of fibers in a tow may vary depending on characteristics of the desired tow and/or characteristics of the CMC component being produced. As an example, a number of SiC fibers (e.g., 100, 200, 300, 400, 500, 1000) may be aligned parallel to create each tow. The fibers may be grouped into discrete bundles.

Fiber tow counts in a CMC fiber preform can also vary widely depending on the specific requirements of the application and the desired properties of the final component. For example, in a unidirectional preform, all fiber tows are oriented parallel to each other in one direction. The fiber tow count in such preforms can range from a few hundred to several thousand fiber tows per square inch or per centimeter, depending on the desired fiber volume fraction and mechanical properties. In woven or braided preforms, the fiber tow count can be even higher, as multiple layers of fiber tows are interlaced or intertwined to create a three-dimensional structure. The fiber tow count in these preforms can range from thousands to tens of thousands of tows.

As noted above, in the present disclosure, intumescent materials can be inserted into the voids between the fibers in a tow bundle and/or into voids between individual tows in outer layer(s) of the preform. The fiber architecture of the CMC preform may be infiltrated with one or more intumescent materials disposed within a liquid containing the intumescent materials, i.e., a coating medium. For example, using an intumescent particle slurry, intumescent particles can be deposited into the voids between the fibers and in particular into the voids in the outer layers of a CMC preform. Expansion of the intumescent particles between the filaments and between the fiber tows improves the filament distribution within fiber tows.

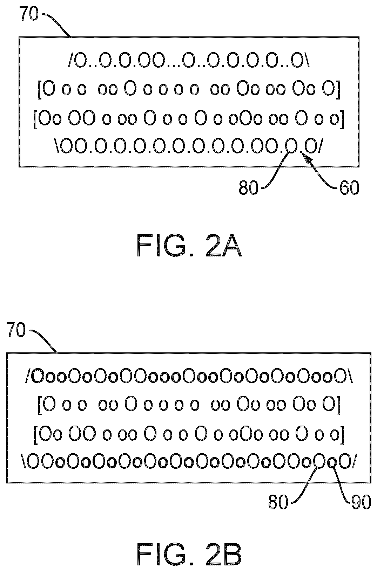

FIGS. 2A and 2B are simplified schematic cross-sectional views through a fiber tow bundle 70 with intumescent particles 60 located in the fiber voids between filaments 80 of the outer portions of the fiber tow bundle. FIG. 2A shows the particles 60 within the fiber tow voids before expansion, and FIG. 2B shows the expanded intumescent particles 90 within the fiber tow voids after heat treatment and expansion. After heat treatment, but prior to intumescent particle transformation temperatures, the fiber tow bundle 70 becomes wider and taller as the expanded intumescent particles 90 cause the filaments 80 to spread thereby reducing the average elastic modulus of the outer layers of the fiber tow.

Regarding size, the intumescent particles may be, prior to expansion, for example, between about 0.5 to 110 microns, such as 0.5 to 100 microns. In further examples, the average intumescent particles size is between about 1 to 10 microns (e.g., 1-3 microns, 4-7 microns, 8 to 10 microns). The slurry used for deposition may contain, for example, about a 2 to 40 vol.% intumescent particulate load (e.g., 2-10 vol.%, 10-30 vol.%, 30 to 40% vol.).

Deposition of intumescent material can be carried out in various ways. The coating medium containing intumescent material (e.g. an intumescent particle slurry) can be deposited on the CMC preform by, for example, spraying, immersion, printing, or painting. In one embodiment, the CMC preform can be immersed in the coating medium. Immersion can include submerging the CMC preform in a vat of the coating medium. Alternative embodiments can include techniques such as spraying, painting, and printing of the coating medium onto CMC preform.

It can be desirable to target either the larger, inter-tow pores (spaces between tows in the CMC preform) or the smaller, intra-tow pores or inter-filament pores (spaces between fiber/filaments within the tows) for particle deposition. In either case, the particle mixture can contain a single or narrow particle size distribution commensurate with the targeted pore size. Deposition targeting both the inter-tow and intra-tow pores can be carried out using a single particle mixture containing multiple or a wide particle size distribution. Because of the disparity in size between inter-tow and intra-tow pores, larger particles will tend to occupy the inter-tow pores, while the smaller particles will tend to move through the smaller, inter-filament spaces within the near surface fiber tows porosity. In this way, particle size and size distribution can be selected for a specific CMC. For example, desirable particle sizes might include a range of 1 to 10 microns to target the smaller, intra-tow pores, and 60 to 110 microns to target the larger, inter-tow pores. In a particular embodiment, the smaller particles can be about 2-12 microns and the larger particles can be about 80-100 microns. It is further possible, if targeting deposition in both inter-tow and intra-tow pores, to apply distinct particle mixtures, each with a single or narrow particle size distribution commensurate with the inter and intra-tow pores, respectively. For example, a first mixture of particles ranging from 1 to 10 microns can be applied, followed by a second mixture of the larger particles ranging from 60 to 110 microns. The application of a single mixture may be more efficient with respect to time and cost. Thus, for example, the batches of particles ranging from 1 to 10 microns and the particles ranging from 60 to 110 microns can be provided in a single step, for example, by using a mixture of these two particle batches with different size distributions.

After the CMC preform is coated, the now intumescent loaded preform may be subjected to densification to fill the remaining void space and form the CMC. Densification involves reducing the porosity within the composite material, making it more solid and robust, by filing the remaining pores with a matrix material. The goal is to achieve a high relative density, ensuring that the final CMC structure is compact and free of large voids.

Various methods are used for densification, including hot pressing, spark plasma sintering (SPS), chemical vapor infiltration (CVI), chemical liquid-vapor deposition (CLVD), liquid silicon infiltration (LSI), and polymer infiltration and pyrolysis (PIP). Chemical vapor infiltration (CVI) involves introducing gaseous precursors into the porous CMC preform. These precursors react at the surface of the fibers, depositing additional material and filling the voids. Chemical liquid-vapor deposition (CLVD) uses liquid precursors that vaporize and infiltrate the preform. The liquid-to-vapor conversion occurs at the fiber surface, leading to densification. Liquid silicon infiltration (LSI) utilizes liquid silicon to infiltrate the CMC preform. Silicon reacts with carbon or other constituents of the CMC preform, forming a dense matrix.

In polymer infiltration and pyrolysis (PIP) a polymer precursor is infiltrated into the preform. The subsequent pyrolysis process converts the polymer into a ceramic matrix. During pyrolysis the matrix shrinks leading to microcracks, which require repeating the polymer and infiltration cycle multiple times.

Densification results in a vapor deposited a vapor deposited matrix (for example, a carbon or silicon carbide matrix) on and within the CMC preform containing the expanded intumescent particles. Following densification of the CMCs, coatings such as EBCs as described above, can be applied.

As used in this specification and the appended claims, the singular forms "a," "an," and "the" include plural forms thereof unless the context clearly indicates otherwise.

Where methods and steps described above indicate certain events occurring in certain order, those of ordinary skill in the art will recognize that the ordering of certain steps may be modified and that such modifications are in accordance with the variations of the invention. Additionally, certain steps may be performed concurrently in a parallel process when possible, as well as performed sequentially. Therefore, the particular order of the steps set forth in the description should not be construed as a limitation.

While the present disclosure has been particularly described, in conjunction with specific preferred embodiments, it is evident that many alternatives, modifications and variations will be apparent to those skilled in the art in light of the foregoing description. It is therefore contemplated that the appended claims will embrace any such alternatives, modifications and variations as falling within the true scope and spirit of the present disclosure.

## Claims

1. A method for improving the foreign object damage tolerance comprising:
a) applying an environmental barrier coating (EBC) (20) containing intumescent material(s) to a CMC substrate (10), and
b) heating the EBC coated CMC substrate (10) to expand the intumescent material(s).

2. The method of claim 1, wherein said intumescent materials are polymeric intumescents, optionally wherein said polymeric intumescents are selected from polypropylene, polyamide, thermoplastic polyurethane, or combinations thereof.

3. The method of claim 1, wherein the intumescent materials are silicate from alkali aluminosilicates, vermiculite, a sol-gel vermiculite, a low iron vermiculite, a substantially iron free vermiculite, mica, perlite, expanded graphite, montmorillonite, polymers, and combination thereof.

4. The method of any preceding claim, wherein the CMC contains fiber tows (70) containing bundles of filaments (80), wherein the filaments (80) comprise silicon carbide (SiC), carbon, mullite 3Al₂O₃·2SiO, mullite 2Al₂O₃SiO₂, silicon nitride, aluminum oxide, or a combination thereof.

5. The method of any preceding claim, wherein the EBC (20) comprises a bond coat and a top coat, and the intumescent material is present in the form of intumescent particles (60, 90) in the top coat of the EBC (20) between 2 to 5 vol.% intumescent particulate load.

6. The method of any preceding claim, wherein the intumescent material is in the form of intumescent particles (60, 90) having a particle size of between 0.5 to 100 microns.

7. The method of any preceding claim, wherein the intumescent material is heated to a transformation temperature of between about 600 to 1000 °C to form the expanded intumescent material.

8. A ceramic matrix composite comprising:
a CMC substrate (10) comprising a plurality of fiber tows (70), each containing a plurality of filaments (80), and a ceramic matrix,
and
an environmental barrier coating (EBC) (20) on the CMC substrate (10) wherein the EBC (20) coating contains expanded intumescent material.

9. The ceramic matrix composite or method of any preceding claim, wherein the intumescent material is in the form of particles (60, 90) having a particle size of between 0.5 to 110 microns.

10. The ceramic matrix composite or method of any preceding claim, wherein the intumescent material is selected from ceramic yielding minerals, intumescent mineral particles, intumescent polymers, and combinations thereof.

11. The ceramic matrix composite or method of any of claims 1 to 9, wherein the intumescent material is selected from alkali aluminosilicates, vermiculite, mica, perlite, expanded graphite, montmorillonite, polymers, and combinations thereof.

12. The ceramic matrix composite of any of claims 8 to 11, wherein the filaments (80) of the fiber tows (70) comprise silicon carbide (SiC), carbon, mullite, silicon nitride, aluminum oxide or a combination thereof.

13. The ceramic matrix composite of any of claims 8 to 12, wherein the EBC (20) comprises material selected from hafnium silicates, zirconium silicates, rare earth monosilicates (RE₂SiO₅) rare earth disilicates (RE₂Si₂O₇), rare earth phosphates, aluminosilicates, or HfO₂-SiO₂-rare earth oxide, and combinations thereof, wherein RE is Sc, Y, La, Ce, Pr, Nd, Pm, Sm, Eu, Gd, Tb, Dy, Ho, Er, Tm, Yb, or Lu, optionally wherein the EBC (20) comprises lanthanum silicate (La₂SiO₅), ytterbium silicate (Yb₂SiO₃), or a combination thereof.

14. The method or ceramic matrix composite of any preceding claim, wherein the EBC (20) comprise a bond coat and a top coat, the intumescent material is present in the form of intumescent particles (60, 90) in the bond coat of the EBC (20) between 2 to 40 vol.% intumescent particulate load.

15. The ceramic matrix composite of any of claims 8 to 14, wherein the EBC (20) comprises 3Al₂O₃·2SiO, 2Al₂O₃SiO₂, or a combination thereof.
